# EUROPÄISCHE PATENTSCHRIFT

(11) **EP 4 253 269 B1**
(45) Veröffentlichungstag und Bekanntmachung des Hinweises auf die Patenterteilung: **18.11.2026**
(21) Anmeldenummer: 23163726.5
(22) Anmeldetag: 23.03.2023
(51) Int. Cl.: B65D 19/44, B65D 88/54, B65D 90/00

(54) **PALETTENTRANSPORTMITTEL, ANORDNUNG UMFASSEND EIN PALETTENTRANSPORTMITTEL UND EINE MEHRZAHL PALETTEN, SOWIE VERFAHREN ZUM TRANSPORTIEREN EINER MEHRZAHL VON PALETTEN**
PALLET TRANSPORT MEANS, ARRANGEMENT COMPRISING A PALLET TRANSPORT MEANS AND A PLURALITY OF PALLETS, AND METHOD FOR TRANSPORTING A PLURALITY OF PALLETS
DISPOSITIF DE TRANSPORT DE PALETTES, AGENCEMENT COMPRENANT UN DISPOSITIF DE TRANSPORT DE PALETTES ET UNE PLURALITÉ DE PALETTES, ET PROCÉDÉ DE TRANSPORT D'UNE PLURALITÉ DE PALETTES

(30) Priorität: 29.03.2022 DE 102022107414
(43) Veröffentlichungstag der Anmeldung: 04.10.2023
(73) Patentinhaber: DHL AG, 53113 Bonn (DE)
(72) Erfinder: MEINER, Hendrik, 04155 Leipzig (DE)
(74) Vertreter: Michalski Hüttermann & Partner mbB

(56) Entgegenhaltungen:
- CN-A- 109 823 849
- CN-A- 110 626 805
- CN-U- 214 691 309
- DE-A1- 10 251 090
- JP-A- H07 315 577
- US-A1- 2004 040 477

## Beschreibung

### Technisches Gebiet

Die Erfindung betrifft ein Palettentransportmittel zum Transportieren einer Mehrzahl Paletten, aufweisend ein Grundgestell eingerichtet zum Aufnehmen der Mehrzahl Paletten.

### Hintergrund der Erfindung

Sogenannte Palettentransportmittel sind aus dem Stand der Technik bekannt und dienen zum Lagern und Transportieren einzelner oder einer Mehrzahl übereinander gestapelter Paletten. Derartige Palettentransportmittel können einerseits manuell mittels einer Deichsel oder andererseits motorisiert zwischen verschiedenen Orten bewegt werden. Als Palette wird in der Regel eine flache Konstruktion bezeichnet, die aus Holz, Metall oder Kunststoff gefertigt sein kann. Auf der Palette können Waren oder einzelne Artikel abgestellt werden, die mittels der Palette transportierbar sind.

Im Bereich der Luftfracht werden sogenannte Unit Load Devices, ULD, als Paletten verwendet, um Gepäck, Fracht und/oder Sendungen in Luftfahrzeuge zu laden. Zur Gewichtsoptimierung sind derartige Paletten in der Regel aus Aluminiumblech mit einem Untergestell aus Profilen gefertigt, wobei oftmals Frachtnetze zur Sicherung des auf der Palette abgestellten Gepäcks, der Fracht und/oder der Sendungen in Ränder des Untergestells eingehängt werden können.

Leere Paletten werden zwischen den unterschiedlichen Orten, beispielsweise einem Terminal und einem auf einem Flugfeld abgestellten Flugzeug, entweder einzeln oder übereinander gestapelt auf vorbeschriebenen Palettentransportmittel bewegt, wobei jedoch beide Varianten nicht optimal sind. Ein Einzeltransport einer Palette mit einem sogenannten Dolly ist selbstredend aufwendig. Das Übereinanderstapeln der Paletten lässt sich in der Regel nur mittels elektromotorisch betriebene Gerätschaften wie Gabelstaplern oder dergleichen bewerkstelligen, wobei der Stapel manuell und derart aufwendig gegen verrutschen gesichert werden muss. Zudem werden nicht selten die einzelnen Paletten beim Be- oder Entladen beschädigt, was zu möglichen Personenunfällen führen kann.

Die Druckschrift CN 214 691 309 U betrifft ein Transportgestell für Schichtholzplatten und löst das Problem ein Transportgestell mit guter Stapelwirkung bereitzustellen. Dafür schlägt die Druckschrift vor, ein übereinanderliegendes Bretttransportgestell bereitzustellen umfassend einem Transportrahmen, wobei zwei Enden des Transportrahmens symmetrisch mit Hebevorrichtungen versehen sind. Die Hebevorrichtung umfasst zwei Kettenräder, wobei ein oberes Kettenrad über eine obere Drehwelle drehbar am Transportrahmen angeordnet ist, das obere Kettenrad mit der Antriebsvorrichtung verbunden ist, und das untere Kettenrad über die untere Drehwelle drehbar am Transportrahmen angeordnet ist. Das obere Kettenrad und das untere Kettenrad sind zudem durch eine Kette verbunden, an deren unteren Hälfte mittels Stiften eine Reihe von Hebeblöcken gleichmäßig angeordnet sind.

Die Druckschrift CN 109 823 849 A beschreibt einen Falttablett-Hebezeug, bestehend aus einem Förderband, einem Metallrahmen, einer Antriebseinheit und Hebevorrichtungen. Das Förderband reicht bis zum unteren Ende des Metallrahmens, und der Metallrahmen ist quaderförmig; das obere Ende des Metallrahmens ist mit der Antriebseinheit versehen und die Antriebseinheit ist mit den Hebevorrichtungen verbunden. Die Hebevorrichtungen sind auf der rechten und linken Innenseite des Metallrahmens installiert, und jede Hebevorrichtung umfasst Hebeketten, die mit Kettenrädern versehen sind, die Rillen im Boden eines Tabletts entsprechen. Der Falttablett-Hebemechanismus ist für den übereinanderliegenden Transport von leeren und vollen Fasstabletts eines Ziehrahmen-Portalhebemechanismus konzipiert.

### Beschreibung der Erfindung

Ausgehend von dieser Situation ist es eine Aufgabe der vorliegenden Erfindung, ein verbessertes Palettentransportmittel und ein entsprechendes Verfahren anzugeben, um eine Mehrzahl Paletten in einfacherer und sicherer Weise transportieren zu können.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe gelöst durch ein Palettentransportmittel zum Transportieren einer Mehrzahl Paletten, aufweisend ein Grundgestell eingerichtet zum Aufnehmen der Mehrzahl Paletten, und wenigstens zwei gegenüberliegend an dem Grundgestell angeordneter Hebeeinrichtungen, wobei jede Hebeeinrichtung eine Mehrzahl miteinander verbundener Konsolen aufweist, wobei die Konsolen in einem ausgefahrenen Zustand in Bezug zu einer Auflagefläche des Grundgestells in orthogonaler Richtung zueinander beabstandet sind, wobei die Konsolen jeweils eingerichtet sind, paarweise gegenüberliegend eine parallel zur Auflagefläche des Grundgestells angeordnete Palette aufzunehmen, und diese Palette in orthogonaler Richtung in Bezug auf die Auflagefläche des Grundgestells zu verfahren, und wobei die Konsolen in einem eingefahrenen Zustand innerhalb des Grundgestells unterhalb der Auflagefläche angeordnet sind und in eingefahrenem Zustand parallel zur Auflagefläche verfahrbar sind.

Ein wesentlicher Punkt der Erfindung liegt darin, dass mittels des vorgeschlagenen Palettentransportmittels einerseits eine Mehrzahl Paletten in sicherer Weise transportierbar sind und andererseits die Paletten einzeln in einfacher Weise auf das Palettentransportmittel ladbar bzw. aus diesem entladbar sind. Denn mittels der verfahrbaren Konsolen der Hebeeinrichtungen können die Paletten einzeln und beabstandet auf dem Palettentransportmittel gelagert werden. Mit anderen Worten wird durch die beabstandete Lagerung sichergestellt, dass die Paletten während des Transports, des Be- und Entladens nicht beschädigt werden, wie es bei den aus dem Stand Technik bekannten Palettentransportmittel regelmäßig der Fall ist.

Bei einer exemplarischen Beladung des Palettentransportmittels kann zunächst eine erste Palette auf dem Grundgestell abgestellt, insbesondere auf das Grundgestell geschoben werden. Durch Verfahren eines Paars gegenüberliegend angeordneter erster Konsolen orthogonal weg vom Grundgestell kann die erste Palette angehoben werden, sodass eine zweite Palette auf dem Grundgestell abstellbar ist. Durch weiteres Verfahren der gegenüberliegend angeordneten Konsolen orthogonal weiter weg vom Grundgestell werden sowohl das Paar erster Konsolen mit der ersten Palette als auch ein dazu beabstandetes Paar zweiter Konsolen, auf denen die zweite Palette zu liegen kommt, angehoben, so dass eine dritte Palette auf dem Grundgestell abstellbar ist. Beim Entladen kann analog vorgegangen werden, sodass durch Absenken der Konsolen die Paletten nach und nach aus dem Palettentransportmittel entladbar sind. Die Konsolen sind in einem eingefahrenen Zustand innerhalb des die Auflagefläche aufweisenden Grundgestells angeordnet, wobei die Auflagefläche beispielsweise als Bodenplatte ausgestaltet ist, und können ein- und ausgefahren werden. Das Be- und Entladens kann mit einer Vorrichtung zum lagegenauen Positionieren einer Transportpalette wie in der Deutschen Patentanmeldung mit der Veröffentlichungsnummer 10 2019 126 427 beschrieben erfolgen. Die Bodenplatte kann durch innenliegende Konsolen einen Höhenunterschied generieren. Für eine Positionierung der Paletten auf der Bodenplatte können Rampen an der Bodenplatte unterstützen. Die Rampen können an Ecken nach oben klappbar oder in der Bodenplatte integriert werden und bei der Be- und Entladung herausgezogen werden. Die Rampen sind bevorzugt gestaltet, nach einem Herunterklappen und/oder Ausziehen eine größere Bewegungsfreiheit in horizontaler Ebene beispielsweise durch ein Kugelgelenk oder ähnliches zu gewährleisten. Im Bereich einer Rampenaufhängung kann ein dämpfendes und/oder flexibles Element zum Verhindern von Beschädigungen bei einer Kollision der Palette mit dem Palettentransportmittel vorgesehen sein.

Das Palettentransportmittel kann als Anhänger ausgestaltet sein, insbesondere mit einer Deichsel zum händischen Bewegen und/oder zum Ankuppeln an ein Zugfahrzeug. Ebenso kann das Palettentransportmittel motorisiert sein, beispielsweise einen Verbrennungs- und/oder einen Elektromotor mit entsprechender Batterie aufweisen. Selbstredend können an einer Unterseite des Grundgestells eine Mehrzahl Räder oder Rollen vorgesehen sein, mittels derer das Palettentransportmittel ebenso wie auf einem Castor Deck verfahrbar ist. Bevorzugt ist das Palettentransportmittel zum Transportieren von 3, 4, 5, 6, 7, 8, 9, 10 oder mehr Paletten ausgestaltet. Das Grundgestell weist bevorzugt eine rechteckartige, insbesondere quadratische Form auf. Die Hebeeinrichtungen sind bevorzugt an Längsseiten des Grundgestells vorgesehen. Bevorzugt sind an jeder Längsseite eine Mehrzahl Hebeeinrichtungen angeordnet und/oder die Hebeeinrichtungen sind terminalartig gestaltet, beispielsweise aus einem Metallprofil und/oder aufweisend ein Terminal, gegenüber welchem die Konsolen verfahrbar sind. Die Hebeeinrichtungen erstrecken sich bevorzugt an einer Oberseite des Grundgestells orthogonal weg von diesem. Beim Transport können Sicherungselemente eine Sicherung der Paletten an dem Grundgestell bewirken. Die Sicherung wird bevorzugt erst vor Transportbeginn getätigt. Bei der Betätigung beispielsweise durch einen Drehmechanismus, können die Sicherungselemente beispielsweise in Form von U-Profilen oder flachen Platten zwischen beabstandeten Paletten positioniert werden.

Die Sicherungselemente können an einer vertikal drehbaren Stange angebracht werden und/oder sind bevorzugt nach Vorgaben des IATA - Airport Handling Manual, AHM, gestaltet. Eine manuelle Betätigung kann mit einem fest angebrachten Griff erfolgen. Ebenso können durch einen Klappmechanismus die mit einem Scharnier versehenen Platten unterhalb der jeweils zu sichernden und beabstandeten Paletten positioniert werden.

Die Konsolen können grundsätzlich beliebig zum Aufnehmen der jeweiligen Palette ausgestaltet sein. Beispielsweise können die Konsolen Winkellaschen, durch welche die Palette aufnehmbar ist, aufweisen. Ebenso ist denkbar, dass die Konsolen durch gedrehte U-Profile gestaltet sind, in welche die Palette einschiebbar ist. Die Konsolen können im Abstand von beispielsweise 100, 200, 300 oder 500 mm angeordnet sein. Paarweise gegenüberliegend bedeutet insbesondere, dass eine Konsole die Palette an einer Seite und die andere Konsole die Palette an der gegenüberliegenden Seite aufnimmt. Im Falle der U-Profile werden, wenn nach einer Beladungssequenz die Palette auf das Grundgestell eingeführt ist, die U-Profile bevorzugt soweit ausgerichtet, dass die Palette in dem U-Profil liegt, so dass der Hebevorgang vollzogen werden kann.

Die Konsolen sind bevorzugt relativ zu der Hebeeinrichtung verfahrbar. In der ausgefahrenen Position, beispielsweise wenn alle Konsolen eine Palette aufgenommen haben, können sich die Konsolen nur in orthogonaler Richtung erstrecken, während sich die Konsolen in der eingefahrenen Position nur allesamt parallel in Bezug auf das Grundgestell erstrecken können. Insofern bedeutet einerseits orthogonal und andererseits parallel in Bezug auf das Grundgestell verfahrbar insbesondere, dass die Konsolen, beispielsweise zwischen der ausgefahrenen Position und der eingefahrenen Position, um einen orthogonal gekrümmten Verfahrweg verfahrbar sind. In Bezug auf das Grundgestell bedeutet insbesondere in Bezug auf eine Grundfläche und/oder Oberfläche des Grundgestells. An seiner Oberseite ist das Grundgestell bevorzugt eben gestaltet.

Gemäß einer bevorzugten Weiterbildung weist jede Hebeeinrichtung einen Kettenzug oder ein Band auf, an welchem die Konsolen vorgesehen sind, welcher Kettenzug oder Band einerseits orthogonal und andererseits parallel in Bezug auf das Grundgestell verfahrbar ist. Der Kettenzug kann als Kette ausgestaltet sein, an dem die Konsolen mittels Winkellaschen befestigt sind. Der Kettenzug ist bevorzugt relativ zu dem Terminal bzw. zu der Hebeeinrichtung sowie parallel zu der Grundfläche des Grundgestells verfahrbar.

Erfindungsgemäß sind die Konsolen unterhalb der Auflagefläche, innerhalb des Grundgestells, parallel in Bezug auf das Grundgestell verfahrbar. Derart lassen sich die Konsolen, insbesondere in der eingefahrenen oder zumindest teilweise eingefahrenen Position, in dem Grundgestell vorhalten, so dass beispielsweise nur mit Paletten belegte Konsolen aus dem Grundgestell herausragen.

Gemäß einer noch weiteren bevorzugten Weiterbildung weist das Palettentransportmittel einen elektromotorischen und/oder hydraulischen innerhalb des Grundgestells oder innerhalb eines orthogonal in Bezug auf das Grundgestell beabstandet zu diesem angeordneten Deckengestell vorgesehenen Antrieb auf, welcher eingerichtet ist, die miteinander verbundenen Konsolen der gegenüberliegend angeordneten Hebeeinrichtungen synchron in Bezug auf das Grundgestell zu verfahren. Der Antrieb kann mittels eines Seils mit dem Kettenzug oder dem Band verbunden sein, wobei ebenso der Kettenzug oder das Band direkt an den Antrieb, beispielsweise ein Hydraulikstempel, angehängt sein kann. Der Kettenzug oder das Band kann mittels einer Umlenkungsrolle mit dem Antrieb verbunden sein. Sofern der Antrieb innerhalb des Grundgestells vorgesehen ist, können zwei Umlenkrollen vorgesehen sein, die am oberen und unteren Ende der Hebeeinrichtung bzw. des Terminals vorgesehen sind. Sofern der Antrieb innerhalb des Deckengestells vorgesehen ist, kann am oberen Ende der Hebeeinrichtung bzw. des Terminals eine Rolle vorgesehen sein. Sofern der Antrieb parallel zur Grundfläche verfahrbar ist, kann die Hebeeinrichtung der einen Seite über eine weitere Umlenkrolle an den Antrieb angeschlossen sein. Alternativ kann der Antrieb als Handantrieb ausgestaltet sein. Bevorzugt weist der Antrieb jedoch eine Batterie auf, so dass das Verfahren der Konsolen bzw. Paletten ortsunabhängig, beispielsweise auf einem Flugvorfeld, möglich ist. Der elektromotorische Antrieb kann eine Ladung eines Akkus über eine PV Anlage erhalten, welche bevorzugt oberhalb des Grundgestells vorgesehen ist.

Nach einer bevorzugten Ausgestaltung ist das Grundgestell rechteckartig gestaltet und weist vier Hebeeinrichtungen auf, wobei jeweils wenigstens zwei Hebeeinrichtungen beabstandet an einer Seite des Grundgestells angeordnet sind. Ebenso können an den gegenüberliegenden Seiten drei, vier oder mehr Hebeeinrichtungen vorgesehen sein. Jeweils eine der zwei Hebeeinrichtungen ist bevorzugt einer Ecke des Grundgestells zugeordnet. Die Hebeeinrichtungen sind bevorzugt derart an dem Grundgestell in Bezug auf die Größe der Paletten angeordnet und/oder dimensioniert, dass die Konsolen die Paletten anheben bzw. absenken können.

Gemäß einer weiteren bevorzugten Ausgestaltung sind die Hebeeinrichtungen verschwenkbar an dem Grundgestell angeordnet. Bevorzugt sind die Hebeeinrichtungen über ein an einem unteren Rand vorgesehenen Gelenk mit dem Grundgestell verbunden und derart von der Grundfläche wegschwenkbar.

In einer noch anderen bevorzugten Weiterbildung sind die Konsolen eingerichtet, die jeweilige Palette zum Verfahren derselben zu untergreifen. Bevorzugt sind die Konsolen, in ihrer Position an den Hebeeinrichtungen, L-förmig ausgestaltet, wobei der untere, waagerechte Teil zum Untergreifen der Paletten dient und der obere, orthogonale Teil mit dem Kettenzug bzw. dem Band verbunden ist. Dabei kann der untere Teil verschwenkbar gestaltet sein, so dass dieser platzsparend an den oberen Teil anschwenkbar ist. Daneben sind weitere Ausgestaltungen der Konsolen denkbar, beispielsweise in Form eines hin zur Palette geöffneten U-Profils. Bevorzugt werden die einer Palette zugeordneten Konsolen insbesondere durch den Antrieb synchron d. h. gleichzeitig verfahren, sodass die Palette beim verfahren stets in der gleichen Ebene verbleibt.

Gemäß einer bevorzugten Ausgestaltung weist das Grundgestell eine Mehrzahl an dem Grundgestell vorgesehener Rollen auf, über welche die jeweilige Palette auf das Grundgestell rollbar ist. Bevorzugt sind die Rollen als Kugelrollen ausgestaltet. Besonders bevorzugt sind die Rollen in regelmäßigen Abständen in Einschieberichtung auf dem Grundgestell bzw. der Grundfläche angeordnet. Bevorzugt sind eine Mehrzahl derartiger Reihen von Rollen bei Abstand zueinander angeordnet. Ebenso können nur an den Rändern benachbart zu den Hebeeinrichtungen solche Reihen von Rollen vorgesehen sein. Die Rollen können in einer bestimmten Fahrtrichtung der Palette elektrisch angetrieben sein.

Das Grundgestell kann umseitig offen gestaltet sein. Bevorzugt ist das Grundgestell seitlich durch Wandelemente begrenzt, die vorderseitig durch eine Öffnung zum Be- und Entladen des Palettentransportmittels mit den Paletten geöffnet sind. Die Wandelemente, wie ein ebenso mögliches Deckenelement, können aus Plexiglas, Kunststoff oder Metall gestaltet sein. Das Grundgestell ist bevorzugt aus Metall gestaltet. Des Weiteren kann das Grundgestell ausgestaltet sein, unterschiedliche Typen von Paletten mit gleichen Maßen bei den Längsseiten und unterschiedlichen Maßen bei den Stirnseiten zu transportieren. Bevorzugt erfolgt ein sortenreiner Transport. Bei unterschiedlichen Maßen bei den Stirnseiten können kürzere Breiten mit einer Sperreinrichtung gesichert werden.

Die Aufgabe der Erfindung wird ferner gelöst durch eine Anordnung umfassend ein Palettentransportmittel wie zuvor beschrieben und eine Mehrzahl Paletten, wobei die Paletten jeweils durch zwei Konsolen aufgenommen sind und orthogonal in Bezug auf die Auflagefläche des Grundgestells voneinander beabstandet angeordnet sind. Bevorzugt sind die Paletten an gegenüberliegenden Seiten durch wenigstens zwei Konsolen, insbesondere jeweils zwei beabstandete Konsolen an jeder Seite aufgenommen. Das Grundgestell kann wie zuvor beschrieben Paletten mit gleicher Länge und unterschiedliche Breite für einen vollständigen Be- und Entladevorgang aufnehmen. Beim Anheben und Transportieren werden die Paletten zweckmäßigerweise mit einer Anschlagsvorrichtung gesichert.

Nach einer bevorzugten Weiterbildung sind die Paletten jeweils als Unit Load Device-Palette oder als Air Cargo Palette ausgestaltet. Als Unit Load Devices, kurz ULD, werden im Allgemeinen Paletten bzw. Luftfrachtpaletten bezeichnet, mittels derer Gepäck, Frachtgut und/oder Sendungen, insbesondere Postsendungen, in Flugzeuge, Großraumflugzeuge und Schmalrumpfflugzeuge, ladbar ist. ULDs bzw. allgemeine Luftfrachtpaletten ermöglichen es, dass große Mengen an Beförderungsgut in großen Einheiten gebündelt und derart einfach und schnell in oder aus dem Flugzeug ladbar ist, was Zeit und Aufwand spart. Die Paletten und/oder die ULD-Paletten sind bevorzugt als Platten aus Aluminiumblech gestaltet, insbesondere mit einem Untergestell aus Profilen, deren Ränder so gestaltet sein können, dass Ösen von Ladung sichernder Frachtnetze in das Untergestell einrastbar sind. Ebenso können die Paletten und/oder die ULD-Paletten aus Kunststoff oder einem Verbundwerkstoff gestaltet sein. Die Maße der ULD-Paletten sind typischerweise in Zoll angegeben, und betragen beispielsweise 88 x 125 Zoll, 96 x 125 Zoll oder 96 x 238 Zoll.

Gemäß einer anderen bevorzugten Weiterbildung korrespondieren die Paletten in ihrer Erstreckung zum Grundgestell. Bevorzugt korrespondiert die Grundfläche des Grundgestells zu den Paletten, ist insbesondere gleich oder annähernd gleich ausgeführt. Insofern sind die Konsolen bzw. die Hebeeinrichtungen bevorzugt derart dimensioniert und/oder an dem Grundgestell angeordnet, dass eine auf das Grundgestell gelegte Palette mittels der Konsolen angehoben bzw. abgesenkt werden kann. Grundsätzlich geht die vorgeschlagene Lösung davon aus, dass die Paletten leer sind, also kein Gepäck, Frachtgut und/oder Sendungen auf den Paletten angeordnet ist. Jedoch ist denkbar, dass das Palettentransportmittel, bei entsprechender Dimensionierung, insbesondere der Höhe des Palettentransportmittels, zum Transportieren beladener Paletten verwendbar ist. Derart kann beispielsweise eine Palette mit einer Frachtsicherung, wie beispielsweise Gurte, Folierung oder ähnliches, innerhalb des Palettentransportmittels gesichert und transportiert werden.

Die Aufgabe der Erfindung wird weiterhin gelöst durch ein Verfahren zum Transportieren einer Mehrzahl Paletten mit einem Palettentransportmittel wie zuvor beschrieben, mit dem Schritt:
zum in Bezug auf die Auflagefläche des Grundgestells orthogonalen Verfahren der Paletten innerhalb des Palettentransportmittels Verfahren der Konsolen einerseits orthogonal und andererseits parallel in Bezug auf die Auflagefläche des Grundgestells.

Durch das vorgeschlagene Verfahren lassen sich eine Mehrzahl Paletten nacheinander auf das Palettentransportmittel laden und wiederum von diesem Entladen, wobei die Paletten mittels der Konsolen übereinander derart in dem Palettentransportmittel stapelbar sind, dass sich die Paletten nicht berühren. Dadurch werden einerseits beim Transportieren der Paletten sowie beim Be- und Entladen der Paletten in bzw. aus dem Palettentransportmittel Schäden an den Paletten vermieden.

Nach einer bevorzugten Weiterbildung weist das Verfahren den Schritt auf:
Einschieben einer Palette auf das Grundgestell,
Verfahren der eingeschobenen Palette orthogonal in Bezug auf das Grundgestell weg von diesem nach oben,
Einschieben einer weiteren Palette auf das Grundgestell, und
Verfahren der weiteren Palette einschließlich der bereits verfahrenen Palette.

Derart lässt sich sukzessive die Mehrzahl der Platten nacheinander auf das Grundgestell ablegen oder auf dieses aufschieben, welche Platten jeweils nacheinander durch wenigstens zwei Konsolen angehoben werden, bis dass alle Platten in dem Palettentransportmittel gelagert sind. In analoger Weise lässt sich das Palettentransportmittel entladen.

Weitere Ausgestaltungen und Vorteile des Verfahrens ergeben sich für den Fachmann in Analogie zu dem zuvor beschriebenen Palettentransportmittel.

### Kurze Beschreibung der Zeichnungen

Nachfolgend wird die Erfindung unter Bezugnahme auf die anliegenden Zeichnungen anhand bevorzugter Ausführungsbeispiele näher erläutert.

In den Zeichnungen zeigen
- Fig. 1: ein Palettentransportmittel zum Transportieren einer Mehrzahl Paletten in einer perspektivischen Ansicht gemäß einem bevorzugten Ausführungsbeispiel der Erfindung,
- Fig. 2: das Palettentransportmittel gemäß Fig. 1 in einer Seitansicht gemäß einem weiteren bevorzugten Ausführungsbeispiel der Erfindung, und
- Fig. 3: das Palettentransportmittel gemäß Fig. 1 in einer perspektivischen Ansicht gemäß einem noch weiteren bevorzugten Ausführungsbeispiel der Erfindung.

### Detaillierte Beschreibung der Ausführungsbespiele

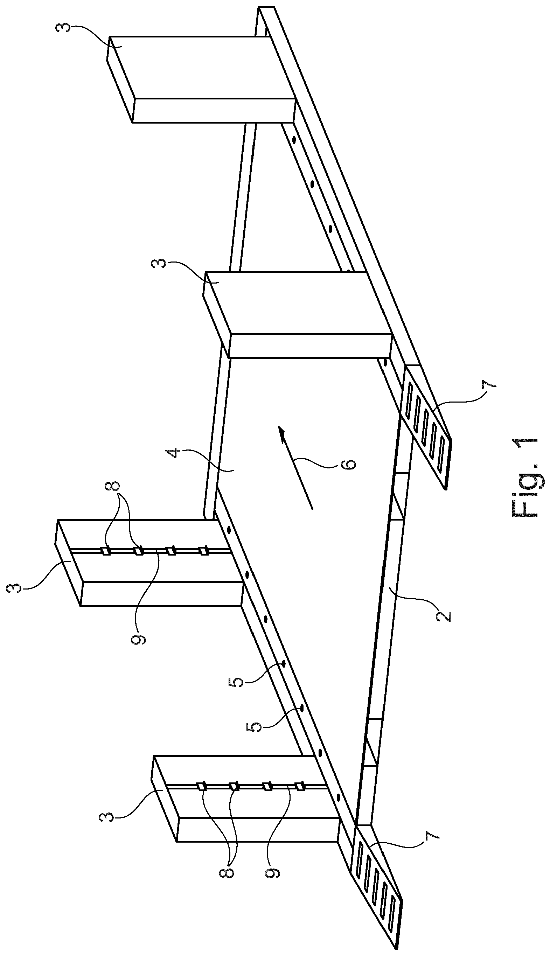

Fig. 1 zeigt ein Palettentransportmittel zum Transportieren einer Mehrzahl Paletten 1 in einer perspektivischen Ansicht gemäß einem bevorzugten Ausführungsbeispiel der Erfindung. Das Palettentransportmittel weist ein rechteckartiges Grundgestell 2 zum Aufnehmen der Mehrzahl Paletten 1 auf. Das Grundgestell 2 weist eine ebene Oberfläche aus Aluminiumblech mit einer Unterkonstruktion aus Aluminiumprofilen auf. An einer Unterseite des Grundgestells 2 sind nicht gezeigte Rollen vorgesehen, so dass das Palettentransportmittel mittels einer ebenso nicht gezeigten Deichsel verfahrbar ist. Alternativ kann das Grundgestell eine flache Unterseite aufweisen, so dass das Grungestell über in den Boden integrierte Rollen oder Kugeln, beispielsweise in Form eines sogenannten "Castor Deck", verfahrbar ist.

An beiden Längsseiten des Grundgestells 2 sind jeweils zwei Hebeeinrichtungen 3 vorgesehen, die jeweils beabstandet voneinander angeordnet sind, so dass eine jeweilige Hebeeinrichtung 3 einer jeweiligen Ecke des Grundgestells 2 zugeordnet ist. Die Hebeeinrichtungen 3 erstrecken sich von der Oberfläche des Grundgestells 2 orthogonal nach oben weg und bilden derart terminalartige Aufbauten aus einem Rechteckprofil aus. Durch die Hebeeinrichtungen 3 wird eine Auflagefläche 4 des Grundgestells 2 ausgebildet.

Auf der Auflagefläche 4 erstrecken sich mehrere parallele Reihen mit beabstandet angeordneten Kugelrollen 5. In Fig. 1 sind zwei jeweils angrenzend an die Hebeeinrichtungen 3 sich in Einschieberichtung 6 der Palette 1 auf die Auflagefläche 4 in der Zeichnungsebene der Fig. 1 von vorne links nach hinten rechts erstreckende Reihen mit beabstandet angeordneten Kugelrollen 5 gezeigt. Daneben können weitere, in Fig. 1 nicht gezeigte Reihen mit beabstandet angeordneten Kugelrollen 5 vorgesehen sein, die sich parallel zu den gezeigten Reihen erstrecken.

Mittels der Kugelrollen 5 lässt sich eine jeweilige Palette 1 auf die Auflagefläche 4 einschieben, bis dass die jeweilige Palette 1 an gegenüberliegenden Seiten eingerahmt durch die Hebeeinrichtungen 3 auf der Auflagefläche 4 zu liegen kommt. An der vorderen Querseite des Grundgestells 2 sind gegenüberliegend Rampen 7 in Verlängerung der Reihen mit den beabstandet angeordneten Kugelrollen 5 vorgesehen, um das Einschieben der jeweiligen Palette 1 auf die Auflagefläche 4 zu erleichtern.

Jede Hebeeinrichtung 3 weist eine Mehrzahl Konsolen 8 auf, von denen eine jeweilige Palette 1 an ihren gegenüberliegenden Rändern aufnehmbar ist. Die Konsolen 8 in Form von Winkellaschen einer jeden Hebeeinrichtung 3 sind fix an einer Kette 9 mit einer Bruchkraft von 60 kN im Abstand von 200 mm angeordnet, die sich, wie in Fig. 1 ersichtlich, jeweils von Auflagefläche 4 orthogonal von dieser weg an dem Terminal der jeweiligen Hebeeinrichtung 3 nach oben erstreckt.

Im Fuß des Terminals der jeweiligen Hebeeinrichtung 3 ist eine nur ansatzweise gezeigte untere Umlenkrolle 10 vorgesehen, die die Kette 9 in das Grundgestell 2 hinein umlenkt, sodass die Kette 9 ebenso parallel zur Auflagefläche 4 und orthogonal zur Einschieberichtung 6 verläuft. Mittels der jeweiligen Kette 9 sind die daran befestigten Konsolen 8 einerseits orthogonal und andererseits parallel in Bezug auf das Grundgestell 2 verfahrbar. Innerhalb des Grundgestells kann die Kette 9 an eine Feder angeschlossen sein. Anstelle der Kette 9 kann ebenso ein Band vorgesehen sein, an dem die Konsolen 8 beabstandet angeordnet sind.

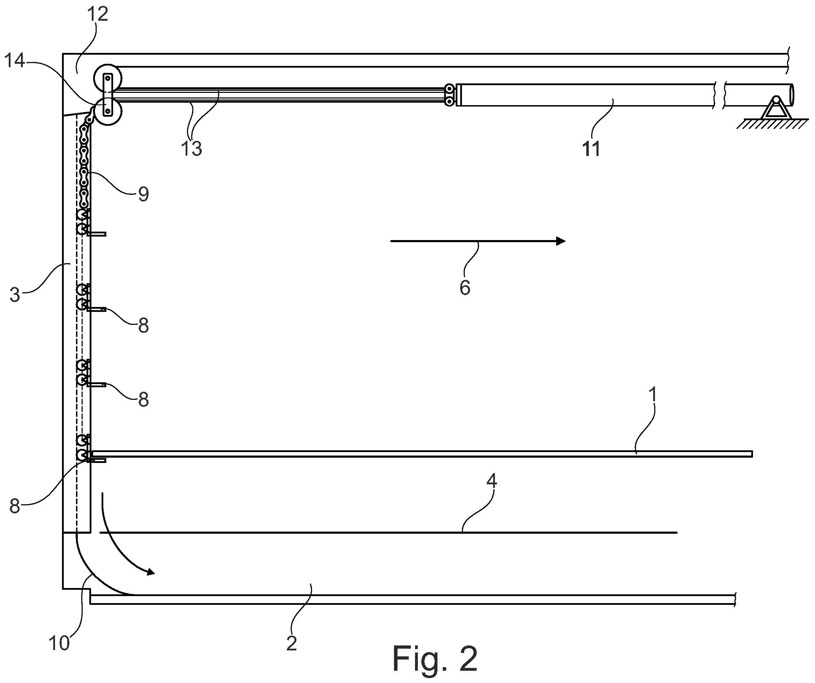

Die Konsolen 8 sind als klappbare Auflagekonsolen ausgestaltet und weisen einen Halteteil auf, der an der Kette befestigt ist und sich parallel zu dieser erstreckt, sowie einen klappbaren Aufnahmeteil für die Palette 1 auf. Der Aufnahmeteil erstreckt sich in der eingeklappten Position parallel zum Halteteil und in der ausgeklappten Position orthogonal zum Halteteil. Entsprechend erstreckt sich der Aufnahmeteil in der in Fig. 2 gezeigten ausgeklappten Position an der Hebeeinrichtung 3 parallel zu der Auflagefläche 4, sodass die Konsole 8 eine Palette 1 an ihrem Rand untergreifen kann.

Sofern nun eine Palette 1 auf die Auflagefläche 4 abgelegt wird, kann durch gleichzeitiges Verfahren aller vier Ketten 9 nach oben weg von der Auflagefläche 4 die Palette 1 in die in Fig. 2 gezeigte Position angehoben werden. Die Auflagefläche 4 wird frei, sodass eine weitere Palette 1 auf die Auflagefläche 4 abgelegt werden kann. Durch weiteres Verfahren der vier Ketten 9 nach oben werden beide Paletten 1 angehoben, sodass eine noch weitere Palette auf die Auflagefläche 4 abgelegt werden kann. Mit der in Fig. 2 gezeigten Ausgestaltung mit jeweils fünf Konsolen 8 können in dem Palettentransportmittel insgesamt sechs Paletten 1 beabstandet übereinander angeordnet und gemeinsam verfahren werden. Sind in dem Palettentransportmittel keine Paletten 1 gelagert, kann die gesamte Kette 9 mit allen Konsolen 8 vollständig in das Grundgestell 2 eingefahren sein.

Zum Verfahren der Ketten 9 ist ein elektromotorischer und/oder hydraulischer Antrieb 11 vorgesehen, der entweder innerhalb des Grundgestell 2 angeordnet ist, wie in Fig. 1 gezeigt, oder in einem Deckengestell 12 vorgesehen sein kann, wie in Fig. 2 gezeigt. Das Deckengestell 12 stützt sich auf den vier Hebeeinrichtungen 3 ab und erstreckt sich parallel beabstandet zu der Auflagefläche 4. Der in Fig. 2 gezeigte Antrieb 11 ist als Hydraulikstempel ausgestaltet, welcher zum Verfahren der Kette 9 in Einschieberichtung 6 mit einem Verfahrweg von 1 Meter verfahrbar ist. Dazu ist der Antrieb 11 mittels eines Seils 13 mit der Kette 9 verbunden, welches Seil 13 mittels einer oberen Umlenkrolle 14 umgelenkt ist.

Die obere Umlenkrolle 14 ist gegenüberliegend zu der unteren Umlenkrolle 10 am oberen Ende des Terminals der jeweiligen Hebeeinrichtung 3 vorgesehen. Über eine weitere obere Umlenkrolle 13 wird ein weiteres Seil 13 umgelenkt, welches mit einer weiteren Kette 9 der gegenüberliegend, in Fig. 2 nicht gezeigten Hebeeinrichtung 3 verbunden ist. Derart können die miteinander verbundenen Konsolen 8 der gegenüberliegend angeordneten Hebeeinrichtungen 3 synchron und parallel in Bezug auf das Grundgestell 2 verfahren werden.

Sofern der Antrieb 11 innerhalb des Grundgestells 2 angeordnet ist, kann die obere Umlenkrolle 14 das Seil in Richtung Grundgestell 2 umlenken. Die profilartig gestalteten Terminals der Hebeeinrichtungen 3 können starr an dem Grundgestell 2 angeordnet sein, nämlich, wie in den Figuren gezeigt, sich orthogonal zur Auflagefläche 4 weg von dieser erstrecken. Ebenso können die Terminals bzw. die Hebeeinrichtungen 3 verschwenkbar an dem Grundgestell 2 angeordnet sein.

Der Antrieb 11 kann ebenso manueller Art sein, bei dem ein Handrad mit Kurbel an jeder Seite des Grundgestells 2 vorgesehen ist. Über ein Schneckengewinde kann eine Bewegung des Handrads auf eine Seilhaspel umgesetzt werden. Der zuvor beschriebene elektromotorische und/oder hydraulische Antrieb 11 kann um eine Batterie ergänzt sein.

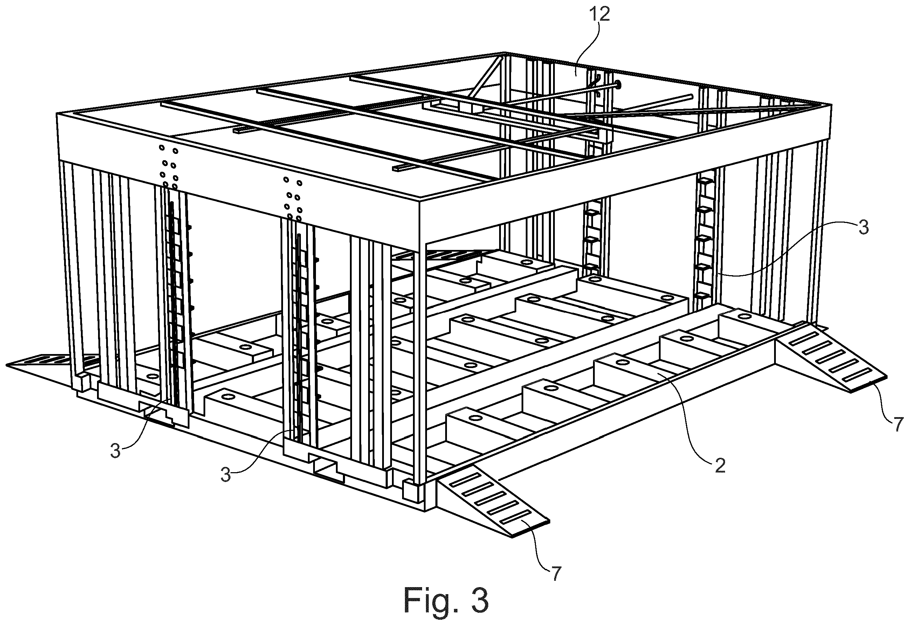

Fig. 3 zeigt eine weitere Ausgestaltung bzw. die Ausgestaltung der Fig. 2 in einer perspektivischen Seitansicht, bei der umseitig um das Grundgestell 2 herum Wandelemente 15 aus Plexiglas angeordnet sind. Zum Be- und Entladen des Palettentransportmittels ist an einer Vorderseite eine Transferöffnung vorgesehen, durch die die Paletten 1 auf das Grundgestell 2 gelangen können. Die gegenüberliegend an der Vorderseite vorgesehenen Rampen 7 sind verschwenkbar gestaltet, sodass durch Schließen der Rampen 7 in dem Palettentransportmittel auf den Konsolen 8 gelagerte Paletten 1 nicht aus dem Palettentransportmittel herausfallen können.

Die beschriebenen Ausführungsbeispiele sind lediglich Beispiele, die im Rahmen der Ansprüche auf vielfältige Weise modifiziert und/oder ergänzt werden können.

### Bezugszeichenliste

| | |
|---|---|
| Palette | 1 |
| Grundgestell | 2 |
| Hebeeinrichtung | 3 |
| Auflagefläche | 4 |
| Kugellrolle | 5 |
| Einschieberichtung | 6 |
| Rampe | 7 |
| Konsole | 8 |
| Kette | 9 |
| Untere Umlenkrolle | 10 |
| Antrieb | 11 |
| Deckengestell | 12 |
| Seil | 13 |
| Obere Umlenkrolle | 14 |
| Wandelement | 15 |

## Patentansprüche

1. Palettentransportmittel zum Transportieren einer Mehrzahl Paletten (1), aufweisend
ein Grundgestell (2) eingerichtet zum Aufnehmen der Mehrzahl Paletten (1), und
wenigstens zwei gegenüberliegend an dem Grundgestell (2) angeordneter Hebeeinrichtungen (3),
wobei jede Hebeeinrichtung (3) eine Mehrzahl miteinander verbundener Konsolen (8) aufweist,
wobei die Konsolen (8) in einem ausgefahrenen Zustand in Bezug zu einer Auflagefläche (4) des Grundgestells (2) in orthogonaler Richtung zueinander beabstandet sind,
wobei die Konsolen (8) jeweils eingerichtet sind, paarweise gegenüberliegend eine parallel zur Auflagefläche (4) des Grundgestells (2) angeordnete Palette (1) aufzunehmen, und diese Palette (1) in orthogonaler Richtung in Bezug auf die Auflagefläche (4) des Grundgestells (2) zu verfahren, und
wobei die Konsolen (8) in einem eingefahrenen Zustand innerhalb des Grundgestells (2) unterhalb der Auflagefläche (4) angeordnet sind und in eingefahrenem Zustand parallel zur Auflagefläche (4) verfahrbar sind.

2. Palettentransportmittel nach dem vorhergehenden Anspruch, wobei jede Hebeeinrichtung (3) einen Kettenzug (9) oder ein Band aufweist, an welchem die Konsolen (8) vorgesehen sind, wobei der Kettenzug (9) oder das Band einerseits orthogonal und andererseits parallel in Bezug auf die Auflagefläche (4) des Grundgestells (2) verfahrbar ist.

3. Palettentransportmittel nach einem der vorhergehenden Ansprüche, mit einem elektromotorischen und/oder hydraulischen innerhalb des Grundgestells (2) oder innerhalb eines orthogonal in Bezug auf das Grundgestell (2) beabstandet zu diesem angeordneten Deckengestells (12) vorgesehenen Antrieb (11), welcher eingerichtet ist, die miteinander verbundenen Konsolen (8) der gegenüberliegend angeordneten Hebeeinrichtungen (3) synchron zu verfahren.

4. Palettentransportmittel nach einem der vorhergehenden Ansprüche, wobei das Grundgestell (2) rechteckartig ausgestaltet ist und vier Hebeeinrichtungen (3) vorgesehen sind, wobei jeweils zwei Hebeeinrichtungen (3) beabstandet an einer Seite des Grundgestells (2) angeordnet sind.

5. Palettentransportmittel nach einem der vorhergehenden Ansprüche, wobei die Hebeeinrichtungen (3) verschwenkbar an dem Grundgestell (2) angeordnet sind.

6. Palettentransportmittel nach einem der vorhergehenden Ansprüche, wobei die Konsolen (8) eingerichtet sind, die jeweilige Palette (1) zum Verfahren derselben zu untergreifen.

7. Palettentransportmittel nach einem der vorhergehenden Ansprüche, mit einer Mehrzahl an dem Grundgestell (2) vorgesehener Rollen (5), über welche die jeweilige Palette (1) auf das Grundgestell (2) rollbar ist.

8. Anordnung umfassend ein Palettentransportmittel nach einem der vorhergehenden Ansprüche und eine Mehrzahl Paletten (1), wobei die Paletten (1) jeweils durch zwei Konsolen (8) aufgenommen sind und orthogonal in Bezug auf die Auflagefläche (4) des Grundgestells (2) voneinander beabstandet angeordnet sind.

9. Anordnung nach dem vorhergehenden Anspruch, wobei die Paletten (1) jeweils als Unit Load Device-Palette (1) ausgestaltet sind.

10. Anordnung nach einem der beiden vorhergehenden Ansprüche, wobei die Paletten (1) in ihrer Erstreckung zum Grundgestell (2) korrespondieren.

11. Verfahren zum Transportieren einer Mehrzahl Paletten (1) mit einem Palettentransportmittel gemäß einem der Ansprüche 1-7, mit dem Schritt:
zum in Bezug auf die Auflagefläche (4) des Grundgestells (2) orthogonalen Verfahren der Paletten (1) innerhalb des Palettentransportmittels, Verfahren der Konsolen (8) einerseits orthogonal und andererseits parallel in Bezug auf die Auflagefläche (4) des Grundgestells (2).

12. Verfahren nach dem vorhergehenden Verfahrensanspruch, mit dem Schritt:
Einschieben einer Palette (1) auf das Grundgestell (2),
Verfahren der Palette (1) orthogonal in Bezug auf das Grundgestell (2) weg von diesem nach oben,
Einschieben einer weiteren Palette (1) auf das Grundgestell (2), und
Verfahren der weiteren Palette (1) einschließlich der bereits verfahrenen Palette (1).

## Claims

1. Pallet transporting means for transporting a plurality of pallets (1), having
a base frame (2) which is configured to receive the plurality of pallets (1), and
at least two lifting devices (3) which are arranged oppositely on the base frame (2),
wherein each lifting device (3) has a plurality of brackets (8) which are connected to one another,
wherein the brackets (8), in an extended state, are spaced apart from one another in an orthogonal direction in relation to a bearing surface (4) of the base frame (2),
wherein the brackets (8) are in each case configured to receive, oppositely in pairs, a pallet (1) which is arranged parallel to the bearing surface (4) of the base frame (2), and to move said pallet (1) in the orthogonal direction in relation to the bearing surface (4) of the base frame (2), and
wherein the brackets (8), in a retracted state, are arranged below the bearing surface (4) within the base frame (2) and, in the retracted state, are movable parallel to the bearing surface (4).

2. Pallet transporting means according to the preceding claim, wherein each lifting device (3) has a chain pulling means (9) or a belt on which the brackets (8) are provided, wherein the chain pulling means (9) or the belt is movable both orthogonally and in a parallel manner in relation to the bearing surface (4) of the base frame (2).

3. Pallet transporting means according to either of the preceding claims, having an electromotive and/or hydraulic drive (11) which is provided within the base frame (2) or within a top frame (12) which is arranged spaced apart orthogonally in relation to the base frame (2) from the latter, which drive is configured to synchronously move the brackets (8), connected to one another, of the oppositely arranged lifting devices (3).

4. Pallet transporting means according to one of the preceding claims, wherein the base frame (2) is of rectangular form and four lifting devices (3) are provided, wherein in each case two lifting devices (3) are arranged spaced apart on a side of the base frame (2).

5. Pallet transporting means according to one of the preceding claims, wherein the lifting devices (3) are arranged pivotably on the base frame (2).

6. Pallet transporting means according to one of the preceding claims, wherein the brackets (8) are configured to engage beneath the respective pallet (1) for the purpose of moving the latter.

7. Pallet transporting means according to one of the preceding claims, having a plurality of rollers (5) which are provided on the base frame (2) and via which the respective pallet (1) is able to be rolled onto the base frame (2).

8. Arrangement comprising a pallet transporting means according to one of the preceding claims and a plurality of pallets (1), wherein the pallets (1) are each received by two brackets (8) and are arranged spaced apart from one another orthogonally in relation to the bearing surface (4) of the base frame (2).

9. Arrangement according to the preceding claim, wherein the pallets (1) are each designed as a unit load device pallet (1).

10. Arrangement according to either of the two preceding claims, wherein, in terms of their extent, the pallets (1) correspond to the base frame (2).

11. Method for transporting a plurality of pallets (1) using a pallet transporting means according to one of Claims 1-7, comprising the step of:
moving the brackets (8) both orthogonally and in a parallel manner in relation to the bearing surface (4) of the base frame (2) for the purpose of moving the pallets (1) within the pallet transporting means orthogonally in relation to the bearing surface (4) of the base frame (2).

12. Method according to the preceding method claim, comprising the step of:
pushing in a pallet (1) onto the base frame (2),
moving the pallet (1) orthogonally in relation to the base frame (2) and away from the latter in an upward direction,
pushing in a further pallet (1) onto the base frame (2), and
moving the further pallet (1) together with the pallet (1) already moved.

## Revendications

1. Moyen de transport de palettes pour transporter une multitude de palettes (1), comportant
un châssis de base (2) mis au point pour recevoir la multitude de palettes (1), et
au moins deux dispositifs de levage (3) disposés en vis-à-vis l'un de l'autre sur le châssis de base (2),
chaque dispositif de levage (3) comportant une multitude de consoles (8) reliées entre elles,
les consoles (8) étant espacées orthogonalement les unes par rapport aux autres dans un état déployé par rapport à une surface de support (4) du châssis de base (2),
les consoles (8) étant chacune mises au point pour recevoir par paire en vis-à-vis une palette (1) disposée parallèlement à la surface de support (4) du châssis de base (2), et pour déplacer ladite palette (1) dans la direction orthogonale par rapport à la surface de support (4) du châssis de base (2), et
les consoles (8) étant disposées dans un état rentré à l'intérieur du châssis de base (2) en dessous de la surface de support (4) et pouvant être déplacées, dans un état rentré, parallèle à la surface de support (4).

2. Moyen de transport de palettes selon la revendication précédente, chaque dispositif de levage (3) comportant un palan à chaîne (9) ou une courroie, sur lequel/laquelle sont prévues les consoles (8), le palan à chaîne (9) ou la courroie pouvant être déplacés d'une part orthogonalement et d'autre part parallèlement à la surface de support (4) du châssis de base (2).

3. Moyen de transport de palettes selon l'une des revendications précédentes, avec un entraînement (11) à moteur électrique et/ou hydraulique prévu à l'intérieur du châssis de base (2) ou à l'intérieur d'un châssis de plafond (12) disposé orthogonalement par rapport au châssis de base (2) à distance de celui-ci, lequel est mis au point pour déplacer de manière synchrone les consoles (8) reliées entre elles des dispositifs de levage (3) disposés en vis-à-vis.

4. Moyen de transport de palettes selon l'une des revendications précédentes, le châssis de base (2) étant rectangulaire et quatre dispositifs de levage (3) étant prévus, deux dispositifs de levage (3) étant chacun disposés à distance sur un côté du châssis de base (2).

5. Moyen de transport de palettes selon l'une des revendications précédentes, les dispositifs de levage (3) étant disposés de manière à pouvoir pivoter sur le châssis de base (2).

6. Moyen de transport de palettes selon l'une des revendications précédentes, les consoles (8) étant mises au point pour saisir par le dessous la palette (1) respective aux fins de son déplacement.

7. Moyen de transport de palettes selon l'une des revendications précédentes, avec une multitude de galets (5) prévus sur le châssis de base (2), lesquels permettent de faire rouler la palette (1) respective sur le châssis de base (2).

8. Ensemble comprenant un moyen de transport de palettes selon l'une des revendications précédentes et une multitude de palettes (1), les palettes (1) étant reçues chacune par deux consoles (8) et étant disposées orthogonalement par rapport à la surface de support (4) du châssis de base (2) à distance l'une de l'autre.

9. Ensemble selon la revendication précédente, les palettes (1) étant chacune configurées comme une palette de dispositif de chargement unitaire (1).

10. Ensemble selon l'une des deux revendications précédentes, les palettes (1) correspondant dans leur extension par rapport au châssis de base (2).

11. Procédé de transport d'une multitude de palettes (1) avec un moyen de transport de palettes selon l'une des revendications 1 à 7, avec l'étape :
pour le déplacement, de manière orthogonale par rapport à la surface de support (4) du châssis de base (2), des palettes (1) à l'intérieur du moyen de transport de palette, déplacement des consoles (8) d'une part orthogonalement et d'autre part parallèlement à la surface de support (4) du châssis de base (2).

12. Procédé selon la revendication précédente de procédé, avec l'étape :
insertion d'une palette (1) sur le châssis de base (2), déplacement de la palette (1) orthogonalement par rapport au châssis de base (2) à l'écart de celui-ci vers le haut,
Insertion d'une autre palette (1) sur le châssis de base (2), et
déplacement de l'autre palette (1), y compris de la palette (1) déjà déplacée.
